# FASCICULE DE BREVET EUROPEEN

(11) **EP 3 674 137 B1**
(45) Date de publication et mention de la délivrance du brevet: **06.04.2022**
(21) Numéro de dépôt: 19217466.2
(22) Date de dépôt: 18.12.2019
(51) Int. Cl.: B60P 7/08

(54) **DISPOSITIF DE MANUTENTION D'UNE SANGLE DE FIXATION ET KIT DE MANUTENTION COMPRENANT UN TEL DISPOSITIF**
HANDHABUNGSVORRICHTUNG EINES SPANNGURTES UND BAUSATZ UMFASSEND EINE SOLCHE HANDHABUNGSVORRICHTUNG
DEVICE FOR HANDLING A TIE DOWN STRAP AND HANDLING KIT COMPRISING SUCH A DEVICE

(30) Priorité: 26.12.2018 FR 1874181
(43) Date de publication de la demande: 01.07.2020
(73) Titulaire: SAS Liftplaq Eurosign, 66530 Claira (FR)
(72) Inventeur: GARCIA, Thomas, 66510 Saint Hippolyte (FR)
(74) Mandataire: Delaveau, Sophie

(56) Documents cités:
- CN-A- 108 749 704
- DE-A1- 10 252 398
- DE-A1-102004 050 700
- KR-A- 20130 073 237
- US-A1- 2008 069 657

## Description

La présente invention concerne un dispositif de manutention d'une sangle de fixation et un procédé de mise en œuvre.

Les sangles de fixation sont utilisées dans de nombreux domaines.

L'invention concerne plus particulièrement les sangles utilisées dans le domaine du transport, notamment routier, ferroviaire, aérien ou naval, pour arrimer un colis au véhicule de transport, comme par exemple au plateau d'un camion.

Dans ce cas, on attache une première extrémité de la sangle d'un côté du plateau, puis on lance l'extrémité libre par-dessus le colis pour la fixer de l'autre côté du plateau et la serrer.

Généralement, les sangles utilisées présentent, à la première extrémité, un crochet ou une griffe destinée à être agrippée au côté du plateau, soit sous le rebord du plateau lui-même, soit à une barre inférieure fixée sous le plateau et parallèlement à celui-ci.

Cette griffe permet une fixation rapide et polyvalente de la sangle. Par polyvalente, on entend que la sangle peut être fixée soit sous le plateau lui-même soit à la barre inférieure.

L'inconvénient de cette fixation est que la première extrémité de la sangle se détache presque systématiquement par gravité pendant l'opération d'arrimage, de sorte qu'il faut être deux utilisateurs pour fixer et tendre la sangle.

On a déjà proposé de fixer la première extrémité de la sangle de manière qu'elle ne puisse pas se détacher par gravité. Par exemple, on peut faire un nœud, enrouler la sangle autour de la barre et accrocher la griffe sur la sangle elle-même, ou on peut munir l'extrémité d'un mousqueton qui sera fixé sur la barre ou sur la sangle. D'autres solutions sont connues par ex. des documents KR 2013 0073237 A, DE 10 2004 050700 A1 et DE 102 52 398 A1.

L'inconvénient de ces solutions est que la fixation de la première extrémité est plus longue. En outre, elle ne peut se faire qu'autour de la barre inférieure et non sous le plateau qui présente pourtant l'avantage d'une plus grande résistance que la barre.

En outre, même si la première extrémité de la sangle reste fixée, cela n'empêche pas une certaine longueur de la sangle de retomber lors du passage de l'autre extrémité à l'opposé du plateau, longueur qui peut s'emmêler les parties saillantes du camion (barres latérales, les roues, les pare-boue, etc.). L'utilisateur est alors obligé de revenir du premier côté pour dégager la sangle avant de retourner tendre la sangle.

La présente invention a notamment pour objectif d'éviter ces inconvénients et de permettre une fixation rapide de la sangle sans risque qu'elle ne retombe ou s'emmêle. L'invention a également pour objectif de permettre une fixation polyvalente, aussi bien sur le plateau que sur les barres latérales inférieures ou autres parties du camion. L'invention vise également à ce que le dispositif de manutention soit facile à mettre en œuvre, léger, très résistant, c'est-à-dire sans partie mobile rapportée, et économique.

La présente invention propose à cet effet un dispositif de manutention pour une sangle de fixation d'un colis sur une structure, le dispositif comprenant, par référence à la position d'utilisation, un passant tubulaire présentant une paroi supérieure munie d'une lumière oblongue, transversale par rapport à la sangle, et une paroi inférieure munie d'au moins un aimant de fixation à la structure.

Selon d'autres caractéristiques de l'invention, prises isolément ou en combinaison :
- le passant tubulaire peut comprendre, en outre, deux parois latérales joignant la paroi inférieure et la paroi supérieure ;
- les parois latérales peuvent présenter une hauteur inférieure au double d'une épaisseur de la sangle ;
- le passant tubulaire peut ne comprendre qu'une paroi latérale ;
- la paroi supérieure peut comprendre, en outre, au moins un orifice de maintien ;
   la paroi supérieure peut comprendre, en outre, un passage longitudinal traversant la paroi supérieure jusqu'à la lumière oblongue ;
- la paroi inférieure peut être munie d'au moins un logement pour l'aimant, le logement comprenant une tige de fixation de l'aimant ; et/ou
- la lumière oblongue peut comprendre un bord transversal rectiligne et un bord transversal curviligne.

L'invention se rapporte également à un kit de manutention pour une sangle de fixation d'un colis sur une structure, le kit comprenant un dispositif de manutention précédent et une sange.

Alternativement ou en combinaison, le kit de manutention comprend un dispositif de manutention précédent et au moins une plaque métallique aimantable munie d'un adhésif de fixation à la structure.

D'autres caractéristiques et avantages de l'invention énoncés dans la description détaillée ci-après donnée à titre d'exemple en référence aux dessins annexés, qui représentent, respectivement :
- [Fig. 1], une vue schématique en perspective d'un premier mode de réalisation d'un dispositif de manutention pour sangle selon l'invention ;
- [Fig. 2], une vue schématique vue de dessus du dispositif de manutention de la figure 1 ;
- [Fig. 3], une vue schématique en perspective d'une sangle munie d'un dispositif de manutention selon l'invention ;
- [Fig. 4] et [Fig. 5], des vues schématiques en perspective de la fixation d'une sangle munie d'un dispositif de manutention selon l'invention à un plateau de camion ;
- [Fig. 6a], [Fig. 7a] et [Fig. 8a], des vues schématiques en perspective d'un premier mode de réalisation de la fixation d'une sangle munie d'un dispositif de manutention selon l'invention à une barre latérale inférieure d'un camion ;
- [Fig. 6b], [Fig. 7b] et [Fig. 8b], des vues schématiques en perspective d'un deuxième mode de réalisation de la fixation d'une sangle munie d'un dispositif de manutention selon l'invention à une barre latérale inférieure d'un camion ;
- [Fig. 9] et [Fig. 10], des vues schématiques d'un deuxième mode de réalisation d'un dispositif de manutention d'une sangle selon l'invention, permettant un passage rapide entre la position de fixation sur un plateau de camion et la position de fixation sur une barre latérale inférieure de camion ;
- [Fig. 11], une vue schématique vue de dessus d'une alternative au deuxième mode de réalisation d'un dispositif de manutention d'une sangle selon l'invention ;
- [Fig. 12], une vue schématique en perspective d'un troisième mode de réalisation d'un dispositif de manutention d'une sangle selon l'invention ;
- [Fig. 13], une vue schématique en perspective vue de dessus d'un quatrième mode de réalisation d'un dispositif de manutention d'une sangle selon l'invention en matériau polymère ;
- [Fig. 14], une vue schématique en perspective vue de dessous du dispositif de manutention de la figure 13 ; et
- [Fig. 15], une vue schématique en coupe du dispositif de manutention de la figure 13.

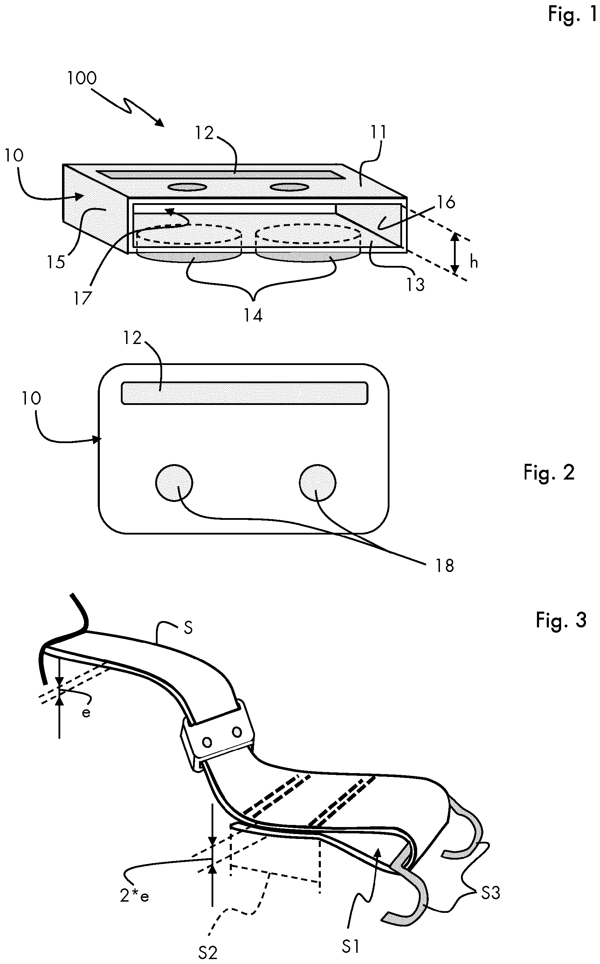

Comme illustré aux figures 1 à 3, un premier mode de réalisation 100 d'un dispositif de manutention selon l'invention pour une sangle de fixation S d'un colis sur une structure.

Il comprend, par référence à la position d'utilisation, un passant tubulaire 10 présentant une paroi supérieure 11 munie d'une lumière oblongue 12, transversale par rapport à la sangle (voir figure 3) et une paroi inférieure 13 munie, dans l'exemple illustré, de deux aimants 14 de fixation à la structure.

Dans ce mode de réalisation, le passant tubulaire 10 comprend, en outre, deux parois latérales 15 et 16 joignant la paroi inférieure 13 et la paroi supérieure 1. Ces quatre parois délimitent ainsi un passage tubulaire 17 pour la sangle S.

Selon l'invention, la lumière oblongue 12 est agencée de manière décentrée sur la paroi supérieure 11. En d'autres termes, la lumière oblongue est plus proche d'une entrée proximale 17a du passage tubulaire 17 que de l'autre entrée distale 17b du passage tubulaire 17.

Comme il sera expliqué par la suite, la sangle est passée par au moins une entrée 17a-17b de ce passage tubulaire (voir figure 3) lorsqu'elle doit être fixée au plateau du camion.

À cette fin, les parois latérales 15 et 16 présentent une hauteur intérieure h (c'est-à-dire la distance séparant les faces intérieures des parois supérieure 11 et inférieure 13 donnant dans l'espace tubulaire) juste inférieure au double de l'épaisseur e de la sangle lorsque cette dernière n'est soumise à aucun écrasement.

La hauteur intérieure h des parois latérales 11-13 est ainsi telle que lorsqu'une double épaisseur de sangle est dans l'espace tubulaire du passant, la sangle coulisse avec frottements, donc en force, entre les parois supérieure et inférieure 11-13 lorsqu'une force de traction seuil est appliquée sur la sangle par un utilisateur.

Or, comme illustrées en figure 3, les sangles classiquement utilisées dans le domaine du transport routier présentent au moins une première extrémité comprenant une boucle S1 constituée par un repli de la sangle sur elle-même et fixée, dans cette position par couture, sertissage ou collage.

La première extrémité de la sangle présente donc une portion S2 présentant une double épaisseur de sangle.

Un crochet ou une griffe de fixation S3 est inséré(e) dans cette boucle S1 pour permettre d'accrocher la première extrémité de la sangle.

Selon un mode de réalisation avantageux, la paroi supérieure 11 comprend, en outre, au moins un orifice de maintien 18 destiné à recevoir les crochets d'un tendeur. Ainsi, lorsque l'on range la sangle, on l'enroule sur elle-même de sorte que le passant selon l'invention se trouve à l'extérieur de l'enroulement ainsi constitué. Un premier crochet d'un tendeur est alors inséré dans l'orifice de maintien 18, puis le tendeur est tendu autour de l'enroulement jusqu'à ce qu'un second crochet puisse être inséré dans l'orifice de maintien 18. Avantageusement, le passant selon l'invention comprend deux orifices de maintien 18, un pour chaque crochet de tendeur.

Alternativement, le diamètre du ou des orifices de maintien 18 est choisi supérieur à un diamètre du crochet de fixation porté par la sangle de sorte qu'en utilisation, le crochet soit en prise avec l'orifice lorsque la sangle est enroulée sur elle-même.

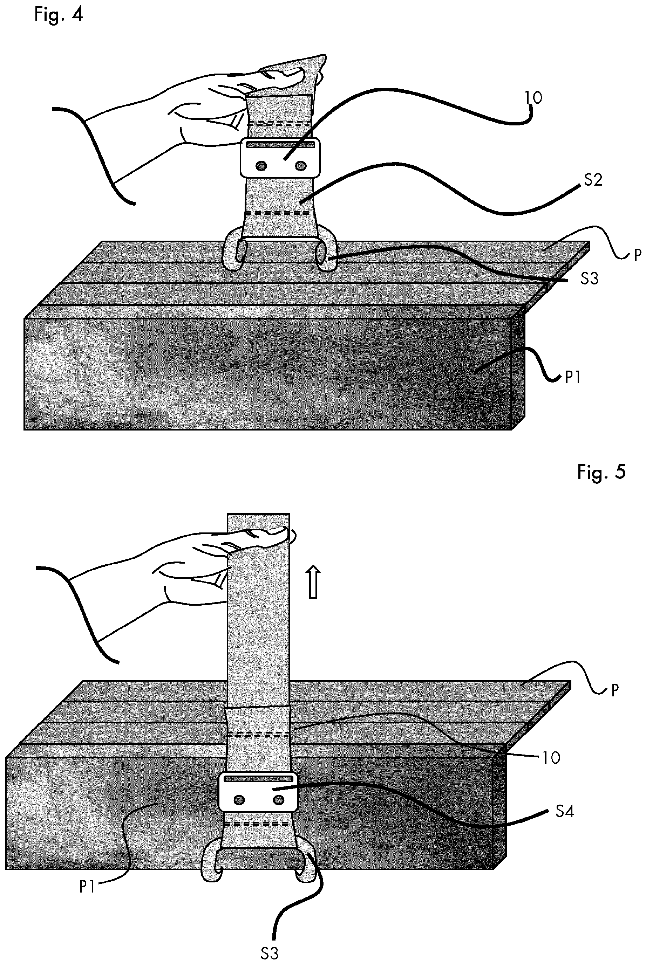

Les figures 4 et 5 illustrent la mise en œuvre du dispositif selon l'invention lorsque la sangle doit être fixée sous le rebord d'un plateau P d'un camion.

Dans ce cas, la sangle S est insérée dans le passage tubulaire 17 du passant 10 par une entrée 17b et ressort du passant par l'autre entrée 17a du passage tubulaire 17 jusqu'à ce que la portion S2 présentant une double épaisseur (figure 4) soit insérée dans le passage tubulaire 17.

Puis la griffe S3 est engagée sous le rebord P1 du plateau P du camion, et le passant 10 est fixé au rebord P1 par le ou les aimants 14.

L'utilisateur tire alors sur la sangle qui coulisse en force dans le passant, jusqu'à ce que la partie S4 de la sangle située entre la griffe S3 et le passant 10 soit tendue. Ainsi, en l'absence de force de traction, la portion S2 présentant une double épaisseur ne peut pas coulisser librement dans le passant.

La première extrémité de la sangle est ainsi fixée au plateau sans risque de se décrocher ou de s'emmêler dans une partie saillante du camion puisqu'elle est tendue et maintenue au-dessus du plateau.

Ainsi, la sangle ne peut pas se détacher ou se détendre sous son propre poids, car la hauteur intérieure h des parois latérales est choisie pour que la force de traction seuil soit supérieure au poids de la portion de sangle comprise entre le passant et la première extrémité portant la griffe ou le crochet de fixation.

L'utilisateur peut alors lancer la deuxième extrémité de la sangle par-dessus le colis à fixer et la récupérer de l'autre côté du plateau pour être fixée classiquement (par exemple dans un cliquet).

Le dispositif de manutention selon l'invention permet également une fixation à une barre latérale P2 du camion agencée sous le plateau P du camion.

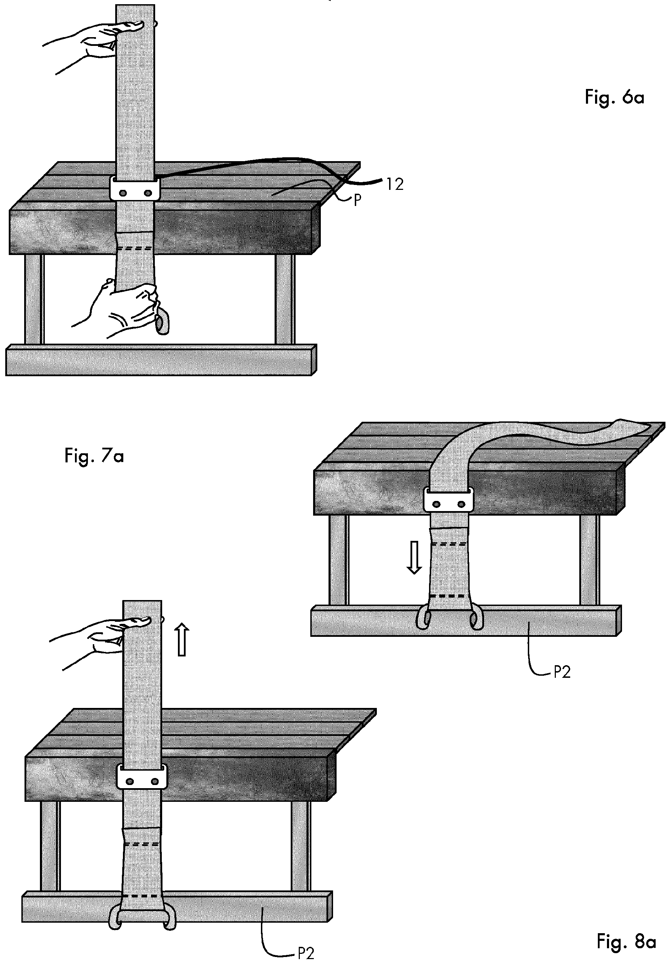

Un premier mode de réalisation de mise en œuvre de cette fixation est illustré aux figures 6a à 8a.

Dans ce cas, la sangle est insérée dans le passant par l'entrée 17b du passage tubulaire 17 la plus éloignée de l'ouverture oblongue 12 puis ressort par l'ouverture oblongue 12 (figure 6a). L'ouverture oblongue 12 présente une largeur telle que seule la partie de la sangle présentant une épaisseur simple peut être insérée.

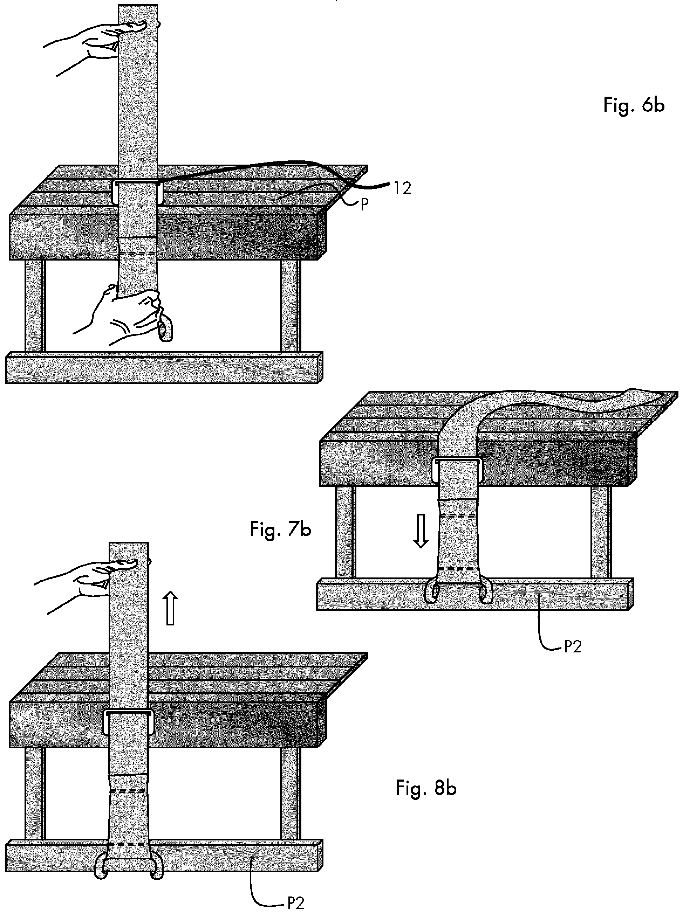

Lors de la fixation de la sangle, le passant 10 selon l'invention est fixé au rebord P1 du plateau P par le ou les aimants. Puis l'utilisateur tire sur la sangle en donnant du mou pour que la sangle coulisse librement dans l'ouverture oblongue 12 et le passant 10 (figure 7a), jusqu'à ce que la griffe S3 de la sangle S puisse être engagée sous la barre inférieure P2.

L'utilisateur maintient alors la griffe S3 en prise avec la barre P2 et tire la sangle pour la tendre (figure 8a). Elle est ainsi maintenue en tension par son coincement dans l'ouverture oblongue 12 du passant 10. Ainsi, la sangle ne peut pas se détacher ou se détendre sous son propre poids si l'utilisateur la lâche.

Comme précédemment, l'utilisateur peut alors lancer la deuxième extrémité de la sangle par-dessus le colis à fixer et la récupérer de l'autre côté du plateau pour être fixée classiquement.

Bien entendu, ce mode de mise en œuvre du passant selon l'invention peut être appliqué également à la fixation de la sangle sous le rebord d'un plateau P d'un camion si la portion S2 présentant une double épaisseur est courte.

Un deuxième mode de réalisation de mise en œuvre de cette fixation est illustré aux figures 6b à 8b.

Dans ce cas, la sangle est insérée dans le passant par l'ouverture oblongue 12 puis ressort par l'entrée 17a du passage tubulaire 17 la plus proche de l'ouverture oblongue 12 (figure 6b).

Ce mode de réalisation est plus pratique à mettre en œuvre, car il est plus facile de récupérer la sangle par l'une des entrées 17a-17b du passage tubulaire 17 que de récupérer la sangle au travers de l'ouverture oblongue 12. Le reste de la mise en œuvre est identique à ce qui a été décrit aux figures 6a à 8a.

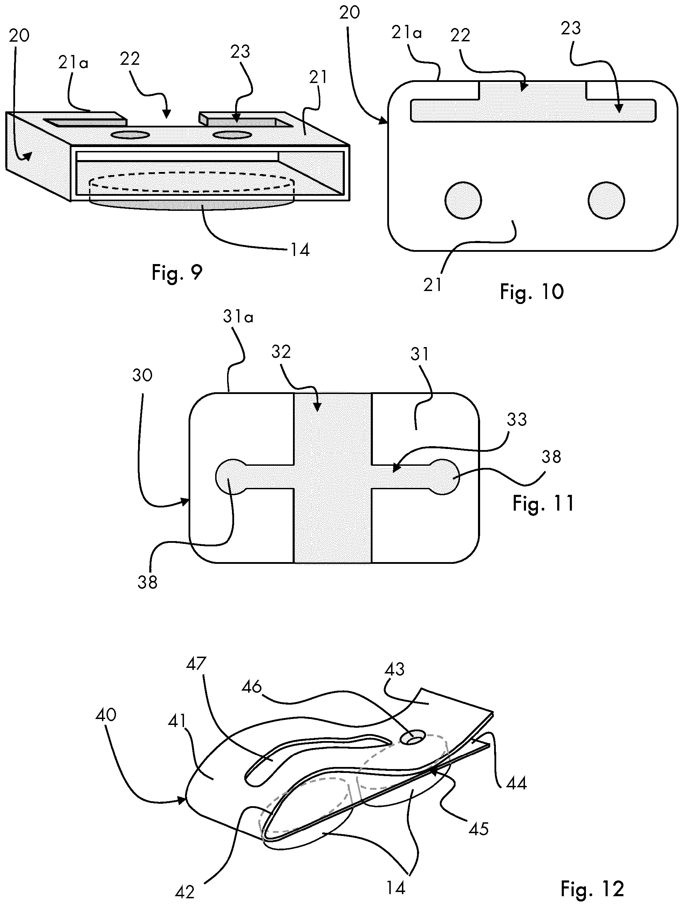

La figure 9 illustre un mode de réalisation de passant 20 particulièrement avantageux, puisqu'il permet de passer facilement du mode de fixation au rebord du plateau au mode de fixation à une barre inférieure, sans avoir à dégager une extrémité de la sangle.

Dans ce mode de réalisation, la paroi supérieure 21 comprend, en outre, un passage longitudinal 22 traversant la paroi supérieure 21 depuis le bord avant 21a jusqu'à la lumière oblongue 23. Ainsi, la lumière oblongue 23 est ouverte vers l'avant du passant 20, à l'opposé de la première extrémité de la sangle portant la griffe de fixation. Dans ce cas, la lumière oblongue 23 forme, avec le passage longitudinal 22, un espace en forme de T ouvert.

Lorsque la sangle est conformée pour une fixation au rebord du plateau, elle est engagée dans le passage tubulaire 25 du passant 20.

Si l'utilisateur souhaite fixer la sangle à une barre inférieure du camion, il lui suffit de passer un premier bord de la sangle dans le passage longitudinal 22 puis à une extrémité de la lumière oblongue23. Puis il passe l'autre bord de la sangle dans le passage longitudinal 22 et l'étire dans l'autre extrémité de la lumière oblongue 23. La sangle s'étend alors dans la lumière oblongue et peut permettre une fixation à une barre inférieure du camion comme expliqué précédemment. La rigidité intrinsèque de la sangle l'empêche de se dégager librement de la lumière oblongue 23. Pour cela, l'utilisateur doit la déformer en force pour dégager l'un puis l'autre bord de la sangle par le passage longitudinal 22.

La figure 11 illustre un mode de réalisation alternatif dans lequel la paroi supérieure 31 du passant 30 comprend un passage longitudinal 32 traversant la paroi supérieure 31 de part en part, c'est-à-dire du bord avant 31a au bord arrière 31b du passant 30, en traversant la lumière oblongue 33.

Ce mode de réalisation peut permettre un passage plus aisé d'un mode de fixation à l'autre lorsque la sangle présente une rigidité importante et qu'il est difficile à l'utilisateur de la déformer pour la faire passer par le passage longitudinal.

Cette variante illustre également le fait que les orifices de maintien 38 peuvent être incorporés à la lumière oblongue 33. Cela permet de réduire la largeur du passant selon l'invention et, donc, de limiter la quantité de matière utilisée.

La figure 12 illustre un autre mode de réalisation d'un dispositif selon l'invention particulièrement facile à dégager de la sangle.

Dans ce mode de réalisation, le passant tubulaire 40 ne comprend qu'une paroi latérale.

Il est constitué d'une tôle 41 repliée sur elle-même de manière à constituer une boucle 42 prolongée par deux pattes 43-44 pouvant s'écarter l'une de l'autre élastiquement. En position de repos, les deux pattes 43-44 sont en contact l'une avec l'autre au niveau d'une zone de contact 45 obtenue par contrainte élastique de la tôle.

Pour équiper la sangle avec le passant selon l'invention, il suffit de forcer son passage entre les deux pattes 43-44 de sorte que la sangle s'étende dans la zone tubulaire délimitée par la boucle 42. La sangle est alors configurée pour une fixation au rebord du plateau.

Pour éviter que la sangle ne sorte librement de la zone tubulaire, la zone de contact est avantageusement pourvue d'une surépaisseur 46 obtenue, par exemple, par emboutissage de la tôle au niveau de la patte supérieure 43.

Pour configurer la sangle pour une fixation à une barre inférieure du camion, il suffit de forcer le passage de la sangle entre les pattes 43-44 vers l'extérieur, puis d'insérer la sangle dans l'ouverture oblongue 47, comme expliqué précédemment.

Les variantes de structures, telles que le passage longitudinal ou les orifices de maintien incorporés à l'ouverture oblongue, illustrées aux figures 9 à 11 peuvent également être incorporées au mode de réalisation de la figure 12 afin de faciliter le passage d'une configuration à l'autre.

Le dispositif selon l'invention peut être fabriqué en métal ou avantageusement en matériau polymère, tel que du PVC (poly chlorure de vinyle) injecté.

Dans ce cas, les aimants ne sont pas vissés sur le passant, mais sertis par bouterollage d'une portion du passant.

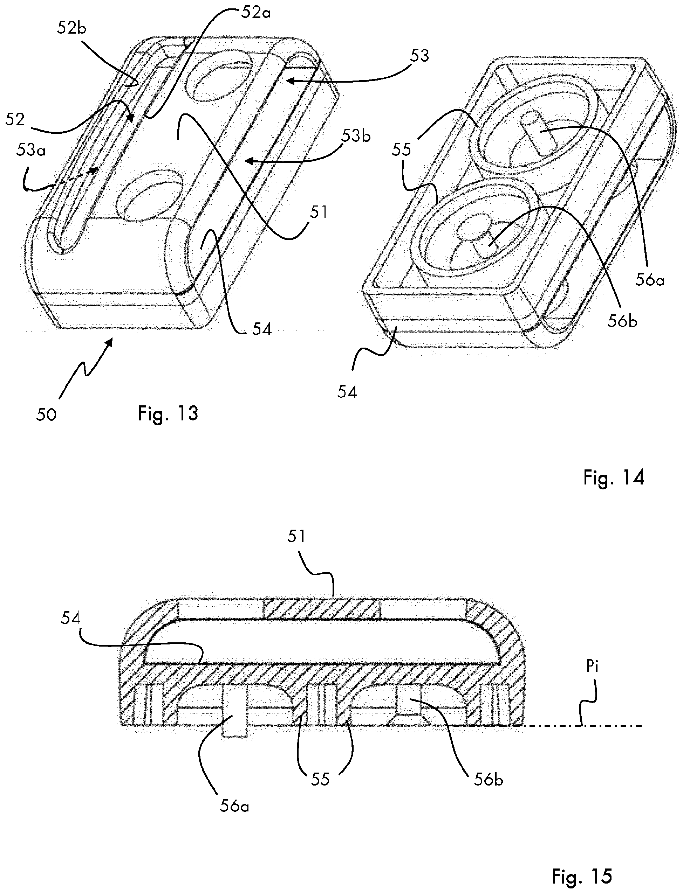

Un exemple de mise en œuvre de ce mode de réalisation est illustré aux figures 13 à 15.

La figure 13 illustre un passant tubulaire 50 en PVC injecté vu de dessus, et présentant une paroi supérieure 51 munie d'une lumière oblongue 52, transversale par rapport au passage 53 de la sangle.

Cette figure illustre une variante de lumière oblongue qui peut être appliquée à tous les modes de réalisation déjà décrits. Dans cette variante, la lumière oblongue 52 présente une forme « en sourire », c'est-à-dire qu'elle comprend un bord transversal rectiligne 52a et un bord transversal curviligne 52b.

Selon l'invention, le bord curviligne 52b est agencé du côté de l'entrée proximale 53a du passage tubulaire 53 la plus proche de l'ouverture oblongue 52, alors que le bord rectiligne 52a est agencé du côté de l'entrée distale 53b du passage tubulaire 53 la plus éloignée de l'ouverture oblongue 52.

Cette forme en sourire de l'ouverture oblongue 52 de la fente permet une meilleure insertion de la sangle et un blocage plus efficace.

La figure 14 illustre le passant de la figure 13 en vue de dessous. La paroi inférieure 54 du passant comprend deux logements 55 pour deux aimants de fixation à la structure (non représentés par souci de clarté de la figure).

Dans ce mode de réalisation, les aimants qui sont prévus pour être insérés dans ces logements 55 sont circulaires et présentent un trou central de fixation.

De manière complémentaire, chaque logement 55 présente une tige centrale 56a-56b destinée à être insérée dans le trou central d'un aimant.

La figure 15 illustre cette structure en coupe.

Lors de la fabrication, on prévoit que chaque tige centrale est cylindrique et dépasse du plan inférieur Pi du passant 50 (voir la tige 56a).

Lors de l'assemblage, on insère un aimant dans chaque logement 55 puis on effectue un bouterollage à chaud pour refouler de la matière de la tige vers l'aimant et fixer ainsi l'aimant (voir tige 56b).

L'autre intérêt d'utiliser un matériau polymère pour la fabrication du passant selon l'invention est la possibilité de colorer les passants.

La fixation par aimant est avantageuse, car elle est ne nécessite aucun outil et permet néanmoins une fixation suffisamment forte, en particulier lorsque l'on utilise des aimants au néodyme. Si la structure du camion n'est pas constituée d'un métal aimantable, c'est-à-dire permettant la fixation d'un aimant (par exemple si la structure comprend ou est constituée par de l'aluminium), l'invention prévoit un kit d'installation comprenant le dispositif de manutention selon l'invention, ainsi qu'une plaque métallique aimantable munie d'un adhésif de fixation à la structure du camion.

Dans ce cas, l'utilisateur fixe d'abord la plaque métallique aimantable sur la structure non aimantable du camion, puis il peut fixer le passant selon l'invention par ses aimants à la plaque métallique aimantable pour la mise en œuvre du dispositif selon l'invention.

## Revendications

1. Dispositif de manutention (10, 20, 30, 40, 50) pour une sangle (S) de fixation d'un colis sur une structure, comprenant, par référence à la position d'utilisation, un passant tubulaire (10, 20, 30, 40, 50) présentant une paroi inférieure (13, 54) munie d'au moins un aimant (14) de fixation à la structure, **caractérisé en ce que** le passant tubulaire (10,20,30,40,50) présente une paroi supérieure (11, 21, 31, 51) munie d'une lumière oblongue (12, 23, 33, 47, 52), transversale par rapport à la sangle.

2. Dispositif de manutention selon la revendication 1, dans lequel le passant tubulaire comprend, en outre, deux parois latérales (14, 15) joignant la paroi inférieure (13, 54) et la paroi supérieure (11).

3. Dispositif de manutention selon la revendication 2, dans lequel les parois latérales présentent une hauteur (h) inférieure au double d'une épaisseur (e) de la sangle.

4. Dispositif de manutention selon la revendication 1, dans lequel le passant tubulaire ne comprend qu'une paroi latérale.

5. Dispositif de manutention selon l'une quelconque des revendications 1 à 3, dans lequel la paroi supérieure comprend, en outre, au moins un orifice de maintien (18, 38).

6. Dispositif de manutention selon l'une quelconque des revendications 1 à 4, dans lequel la paroi supérieure comprend, en outre, un passage longitudinal (22, 32) traversant la paroi supérieure jusqu'à la lumière oblongue.

7. Dispositif de manutention selon l'une quelconque des revendications 1 à 6, dans lequel la paroi inférieure (54) est munie d'au moins un logement (55) pour l'aimant, le logement comprenant une tige de fixation de l'aimant.

8. Dispositif de manutention selon l'une quelconque des revendications 1 à 7, dans lequel la lumière oblongue (52) comprend un bord transversal rectiligne (52a) et un bord transversal curviligne (52b).

9. Kit de manutention pour une sangle (S) de fixation d'un colis sur une structure, **caractérisé en ce qu'**il comprend un dispositif de manutention selon l'une quelconque des revendications 1 à 8 et une sange (S).

10. Kit de manutention pour une sangle (S) de fixation d'un colis sur une structure, **caractérisé en ce qu'**il comprend un dispositif de manutention selon l'une quelconque des revendications 1 à 8 et au moins une plaque métallique aimantable munie d'un adhésif de fixation.

## Patentansprüche

1. Handhabungsvorrichtung (10, 20, 30, 40, 50) für einen Befestigungsgurt (S) eines Kollos auf einer Struktur, umfassend, unter Bezugnahme auf die Nutzungsposition, einen röhrenförmigen Durchgang (10, 20, 30, 40, 50), der eine untere Wand (13, 14) aufweist, die mit wenigstens einem Befestigungsmagnet (14) an der Struktur versehen ist, **dadurch gekennzeichnet, dass** der röhrenförmige Durchgang (10, 20, 30, 40, 50) eine obere Wand (11, 12, 31, 51) aufweist, die mit einer länglichen Öffnung (12, 23, 33, 47, 52) versehen ist, die in Bezug auf den Gurt quer verläuft.

2. Handhabungsvorrichtung gemäß Anspruch 1, bei der der röhrenförmige Durchgang darüber hinaus zwei Seitenwände (14, 15) umfasst, die die untere Wand (13, 54) und die obere Wand (11) anschließen.

3. Handhabungsvorrichtung gemäß Anspruch 2, bei der die Seitenwände eine Höhe (h) aufweisen, die niedriger ist als das Doppelte einer Dicke (e) des Gurtes.

4. Handhabungsvorrichtung gemäß Anspruch 1, bei der der röhrenförmige Durchgang nur eine Seitenwand umfasst.

5. Handhabungsvorrichtung gemäß irgendeinem der Ansprüche 1 bis 3, bei der die obere Wand darüber hinaus wenigstens eine Halteöffnung (18, 38) umfasst.

6. Handhabungsvorrichtung gemäß irgendeinem der Ansprüche 1 bis 4, bei der die obere Wand darüber hinaus einen länglichen Durchgang (22, 32) umfasst, der die obere Wand bis zur länglichen Öffnung durchquert.

7. Handhabungsvorrichtung gemäß irgendeinem der Ansprüche 1 bis 6, bei der die untere Wand (54) mit wenigstens einer Aufnahme (55) für den Magnet versehen ist, wobei die Aufnahme einen Befestigungsstift des Magnetes umfasst.

8. Handhabungsvorrichtung gemäß irgendeinem der Ansprüche 1 bis 7, bei der die längliche Öffnung (52) einen geradlinigen, quer verlaufenden Rand (52a) und einen gekrümmten, quer verlaufenden Rand (52b) umfasst.

9. Handhabungskit für einen Befestigungsgurt (S) eines Kollos auf einer Struktur, **dadurch gekennzeichnet, dass** er eine Handhabungsvorrichtung gemäß irgendeinem der Ansprüche 1 bis 8 und einen Gurt (S) umfasst.

10. Handhabungskit für einen Befestigungsgurt (S) eines Kollos auf einer Struktur, **dadurch gekennzeichnet, dass** es eine Handhabungsvorrichtung gemäß irgendeinem der Ansprüche 1 bis 8 und wenigstens eine magnetisierbare Metallplatte umfasst, die mit einem Befestigungshaftklebstoff versehen ist.

## Claims

1. A handling device (10, 20, 30, 40, 50) for a strap (S) for attaching a package to a structure, comprising, by reference to the position of use, a tubular frame (10, 20, 30, 40, 50) having a lower wall (13, 54) provided with at least one magnet (14) for attaching to the structure, **characterised in that** the tubular frame (10, 20, 30, 40, 50) has an upper wall (11, 21, 31, 51) provided with an oblong lumen (12, 23, 33, 47, 52) transverse to the strap.

2. The handling device according to claim 1, wherein the tubular frame further comprises two side walls (14, 15) joining the lower wall (13, 54) and the upper wall (11) together.

3. The handling device according to claim 2, wherein the side walls have a height (h) lower than twice a thickness (e) of the strap.

4. The handling device according to claim 1, wherein the tubular frame only comprises one side wall.

5. The handling device according to any of claims 1 to 3, wherein the upper wall further comprises at least one holding port (18, 38).

6. The handling device according to any of claims 1 to 4, wherein the upper wall further comprises a longitudinal passage (22, 32) passing through the upper wall to the oblong lumen.

7. The handling device according to any of claims 1 to 6, wherein the lower wall (54) is provided with at least one housing (55) for the magnet, the housing comprising a rod for attaching the magnet.

8. The handling device according to any of claims 1 to 7, wherein the oblong lumen (52) comprises a rectilinear transverse edge (52a) and a curvilinear transverse edge (52b).

9. A handling kit for a strap (S) for attaching a package to a structure, **characterised in that** it comprises a handling device according to any of claims 1 to 8 and a strap (S).

10. A handling kit for a strap (S) for attaching a package to a structure, **characterised in that** it comprises a handling device according to any of claims 1 to 8 and at least one magnetisable metal plate provided with an adhesive tape.
